# EUROPÄISCHE PATENTSCHRIFT

(11) **EP 2 379 829 B1**
(45) Veröffentlichungstag und Bekanntmachung des Hinweises auf die Patenterteilung: **13.01.2016**
(21) Anmeldenummer: 10700249.5
(22) Anmeldetag: 13.01.2010
(51) Int. Cl.: E05C 3/12, H02K 35/00, B64C 1/14

(54) **KABELLOSES AUTARKES ÜBERWACHUNGSSYSTEM FÜR EINEN TÜRVERRIEGELUNGSMECHANISMUS**
WIRELESS SELF-SUFFICIENT MONITORING SYSTEM FOR A DOOR LOCK MECHANISM
SYSTÈME DE CONTRÔLE AUTONOME SANS CÂBLE POUR UN MÉCANISME DE VERROUILLAGE DE PORTE

(30) Priorität: 16.01.2009 DE 102009004835; 16.01.2009 US 205340 P
(43) Veröffentlichungstag der Anmeldung: 26.10.2011
(73) Patentinhaber: Airbus Operations GmbH, 21129 Hamburg (DE)
(72) Erfinder: EBELING, Stefan, 26389 Wilhelmshaven (DE); ROWOLD, Lars, 26316 Varel (DE); POPE, Michael, 21717 Fredenbeck (DE)
(74) Vertreter: Maiwald Patentanwalts GmbH
(86) Internationale Anmeldenummer: PCT/EP2010/050332
(87) Internationale Veröffentlichungsnummer: WO 2010/081816

(56) Entgegenhaltungen:
- EP-A1- 1 227 034
- WO-A2-2007/027702
- GB-A- 2 438 548
- US-A1- 2004 212 195
- US-A1- 2008 210 823

## Beschreibung

### Gebiet der Erfindung

Die Erfindung betrifft die Überwachung von Türverriegelungen in Transportmitteln und von Stauräumen bzw. Türen jeglicher Art. Insbesondere betrifft die Erfindung ein Überwachungssystem für einen Türverriegelungsmechanismus einer Tür eines Transportmittels, ein Transportmittel mit einer Tür mit Türverriegelungsmechanismus und einem solchen Überwachungssystem, die Verwendung eines Überwachungssystems in einem Luftfahrzeug sowie ein Verfahren zur Überwachung eines Türverriegelungsmechanismus.

### Technologischer Hintergrund

Bekannte Verriegelungsmechanismen für Flugzeugtüren weisen einen T-förmigen Griff auf, der von einer Verriegelungsstellung in eine Entriegelungsstellung gebracht werden kann, indem er um eine Schwenkachse rotiert wird. Typische Rotationswinkel betragen 65 Grad.

Diese T-förmigen Griffe sind an vielen Türen in Luftfahrzeugen angebracht. Beispielsweise weist die Tür des Fahrkorbs (Cage Door) des sogenannten TrolleyLift Conveyance Systems der A 380 und der A340-600 einen solchen Griff auf. Im Anschluss daran befindet sich die sog. "Trunk Door" (Außentür).

Ist der T-förmige Griff in der geöffneten Position, also nach oben geklappt, wird ein Schließen der Trunk-Tür verhindert, da der Griff dies verhindert.

Die Kontrolle der Griffstellung erfolgt optisch oder teilweise auch mechanisch, da ja die Trunk-Tür nicht geschlossen werden kann, wenn sich der Griff in der Entriegelungsposition befindet. Ein zusätzlicher Abstandshalter an der Innenseite der Trunk-Tür unterstützt diesen mechanischen Schutz, ein Schließen der Außentür (Trunk Tür) bei geöffneter Innentür (Cage Tür) zu verhindern.

Allerdings kann es in diesem Fall zu einer Beschädigung der Türen kommen, falls zu hohe Kräfte angewendet werden und der T-förmige Griff zu fest gegen die äußere Tür drückt und damit der mechanische Schutz überwunden wird.

EP 1 907 654 A2 und US 2008/0210823 A1 zeigen Steuerungen zum Verriegeln und Entriegeln von Flugzeugtüren, welche mehrere mechanische Elemente aufweisen.

US 2008/0210823 A1 beschreibt eine Steuerungsvorrichtung zum Verriegeln und Entriegeln einer Flugzeugtür.

GB 2 438 548 A beschreibt eine elektromagnetische Vorrichtung zur Konvertierung mechanischer Vibrationsenergie in elektrische Energie.

### Zusammenfassung der Erfindung

Es ist eine Aufgabe der Erfindung, eine verbesserte Kontrolle eines Türverriegelungsmechanismus einer Tür eines Transportmittels anzugeben.

Es sind ein Überwachungssystem für einen Türverriegelungsmechanismus einer Tür eines Transportmittels, eines Stauraumes, ein Transportmittel mit einem Überwachungssystem, die Verwendung eines Überwachungssystems in einem Luftfahrzeug sowie ein Verfahren gemäß den Merkmalen der unabhängigen Ansprüche angegeben. Weiterbildungen der Erfindung ergeben sich aus den Unteransprüchen.

Die beschriebenen Ausführungsbeispiele betreffen gleichermaßen das Überwachungssystem, das Transportmittel, die Verwendung und das Verfahren. In anderen Worten sind die im Folgenden beispielsweise im Hinblick auf das Überwachungssystem genannten Merkmale auch gleichzeitig in dem Verfahren implementiert, und umgekehrt.

Gemäß einem Ausführungsbeispiel der Erfindung ist ein Überwachungssystem für einen Türverriegelungsmechanismus einer Tür eines Transportmittels oder allgemein eines Stauraumes angegeben, wobei das Überwachungssystem einen Generator und einen Sensor aufweist. Der Generator ist zum Erzeugen von elektrischer Energie aus Vibrations- oder Bewegungsenergie zum Betreiben des Überwachungssystems ausgeführt und der Sensor ist zum Detektieren eines Zustands des Türverriegelungsmechanismus und zur Generierung (beispielsweise induktiv oder kapazitiv) eines elektrischen Signals, welches der momentanen Zustandsbeschreibung dient, ausgeführt.

Die elektrische Energie kann alternativ oder zusätzlich zur Gewinnung aus Vibrations- oder Bewegungsenergie auch aus Licht (Solarenergie) gewonnen werden.

Bei dem Überwachungssystem handelt es sich also um ein elektrisches bzw. elektronisches System, welches elektrische Energie zum Betrieb benötigt, womit die Steuereinheit (Mikrochip) gespeist wird. Diese elektrische Energie wird aus Vibrationsenergie mit Hilfe des Generators gewonnen. Andere Energiequellen sind nicht erforderlich. Auch kann zumindest ein Teil der Energie aus einer Bewegung des Griffs des Türverriegelungsmechanismus gewonnen werden.

Gemäß einem weiteren Ausführungsbeispiel der Erfindung stammt die Vibrationsenergie von einer Vibration des Transportmittels, wobei der Generator geeignete Frequenzwandler zum Erzeugen der elektrischen Energie aufweist.

Wird der Griff (Aktorik) bewegt, also z.B. von dem Verriegelungszustand in den Entriegelungszustand gebracht, kann ebenfalls elektrische Energie erzeugt werden. Dies dient zur Zustandserkennung des Schließmechanismus und zum Start der Nachrichtenübermittlung an die Steuereinheit.

Gemäß einem weiteren Ausführungsbeispiel der Erfindung weist das Überwachungssystem weiterhin eine Energiemanagementeinheit zum Steuern einer konstanten Ausgangsspannung für einen µ-Controller auf. Auf diese Weise kann die durch den Vibrationsgenerator erzeugte variable Spannung auf einen gewünschten konstanten Wert gebracht werden.

Weiterhin dient die Energiemanagementeinheit zur effizienten Nutzung der Energie

Die Energiemanagementeinheit sorgt dafür, dass der µ-Controller immer mit der gewünschten Leistung versorgt wird, beispielsweise unabhängig von der Stärke der Vibration des Transportmittels bzw. unabhängig von der Leistung des Generators.

Gemäß einem weiteren Ausführungsbeispiel der Erfindung weist die Energiemanagementeinheit einen Energiespeicher zur Speicherung zumindest eines Teils der elektrischen Energie zum Betreiben des Überwachungssystems auf.

Die vom Generator erzeugte Überschussenergie wird also im Energiespeicher zwischengespeichert und kann bei Bedarf an den µ-Controller bzw. an den Sensor / Aktor oder auch an einen Transceiver zum Übertragen von Informationen abgegeben werden.

Gemäß einem weiteren Ausführungsbeispiel der Erfindung weist der Energiespeicher einen Kondensator auf. Hierbei handelt es sich beispielsweise um einen Doppelschicht-Kondensator wie einen Goldcap-, Supercap-, Boostcap- oder Ultracap-Kondensator.

Natürlich kann der Energiespeicher auch (zusätzlich oder alternativ zum Kondensator) einen Akkumulator aufweisen.

Gemäß einem weiteren Ausführungsbeispiel der Erfindung ist der Sensor / Aktor zur Umwandlung einer Druck- / Bewegungskraft in ein elektrisches Signal ausgeführt. Es kann sich um einen piezoelektrischen-, elektromagnetischen- oder -kapazitiven Sensor/ Aktor handeln. Wird Druck / Kraft auf den Türverriegelungsmechanismus, beispielsweise auf einen entsprechenden Handgriff des Mechanismus ausgeübt, detektiert der Sensor diesen Druck / -Kraft und anhand der detektierten Daten ist feststellbar, ob der Türverriegelungsmechanismus geschlossen oder offen ist. Auch kann ein optischer / induktiver Sensor vorgesehen sein, der die Stellung des Griffs detektiert. Auch kann der Sensor derart ausgeführt sein, dass er die Drehstellung des Griffs des Verriegelungsmechanismus detektiert, indem er beispielsweise an bzw. im Bereich der Drehachse des Griffs angebracht ist.

Der Griff kann bedingt durch die Erfindung derart modifiziert werden, dass eine Drehstellung nicht mehr erforderlich ist.

Gemäß einem weiteren Ausführungsbeispiel der Erfindung handelt es sich bei der Tür um eine Kabinentür eines Passagierflugzeugs. Es kann sich auch um eine andere Tür oder Klappe eines Stauraumes eines Passagierflugzeugs handeln.

Gemäß einem weiteren Ausführungsbeispiel der Erfindung ist das Überwachungssystem zum energieautonomen Betrieb ausgeführt. Unter "energieautonomem Betrieb" ist zu verstehen, dass dem Überwachungssystem keine weitere Energie als die Vibrationsenergie zugeführt werden muss, um einen ordnungsgemäßen Betrieb zu ermöglichen.

Gemäß einem weiteren Ausführungsbeispiel der Erfindung weist das Überwachungssystem weiterhin einen µ-Controller und einen Transceiver auf. Der µ-Controller ist an den Sensor gekoppelt und nimmt von dem Sensor ein Messsignal entgegen, welches mit dem Zustand des Türverriegelungsmechanismus korrespondiert. Der Transceiver dient dem kabellosen Übermitteln eines Signals von dem µ-Controller, das mit dem Messsignal korrespondiert. Die Übermittlung erfolgt vom Transceiver an eine externe Steuereinheit.

Gemäß einem weiteren Ausführungsbeispiel der Erfindung handelt es sich bei der Steuereinheit um eine Steuerung für einen Trolleylift.

Gemäß einem weiteren Ausführungsbeispiel der Erfindung weist das Überwachungssystem weiterhin ein Display zum Anzeigen des Zustands des Türverriegelungsmechanismus auf. Auf diese Weise ist es auf einfache Art möglich, den aktuellen Zustand des Türverriegelungsmechanismus abzulesen, ohne dass eine optische Kontrolle des Mechanismus erfolgen muss.

Gemäß einem weiteren Ausführungsbeispiel der Erfindung ist ein Transportmittel mit einer Tür mit Türverriegelungsmechanismus und einem oben und im Folgenden beschriebenen Überwachungssystem angegeben.

Bei dem Transportmittel handelt es sich beispielsweise um ein Luftfahrzeug, insbesondere ein Passagierflugzeug, oder aber auch um ein anderes Transportmittel, wie ein Wasserfahrzeug, Schienenfahrzeug oder Landfahrzeug.

Gemäß einem weiteren Ausführungsbeispiel der Erfindung ist die Verwendung eines solchen Überwachungssystems in einem Luftfahrzeug angegeben.

Gemäß einem weiteren Ausführungsbeispiel der Erfindung ist ein Verfahren zum Überwachen eines Türverriegelungsmechanismus einer Tür oder Verschluß eines Stauraumes eines Transportmittels angegeben, bei dem elektrische Energie aus Vibrationsenergie und Bewegungsenergie (erzeugt durch Betätigung des Griffes), zum Betreiben eines Überwachungssystems erzeugt wird und dann ein Zustand des Türverriegelungsmechanismus durch einen Sensor des Überwachungssystems detektiert wird. Der Zustand des Schließmechanismus wird zu dem Zeitpunkt der Betätigung automatisch zur Steuereinheit gesendet.

Durch die Energiespeicherung eines Pufferspeichers ist es möglich den Zustand der Schließmechanismus jederzeit abzufragen. Dies dient trägt erhöhten Systemzuverlässigkeit und -sicherheit bei, die dadurch garantiert werden kann.

Im Folgenden werden mit Verweis auf die Figuren Ausführungsbeispiele der Erfindung beschrieben.

Kurze Beschreibung der Figuren
Fig. 1 zeigt einen Türverriegelungsmechanismus.
Fig. 2 zeigt eine innere und eine äußere Tür eines Luftfahrzeugs.
Fig. 3 zeigt eine innere und eine äußere Tür eines Luftfahrzeugs.
Fig. 4 zeigt ein Betriebspaneldisplay.
Fig. 5 zeigt eine geschlossene beschädigte Tür.
Fig. 6 zeigt ein Überwachungssystem gemäß einem Ausführungsbeispiel der Erfindung.
Fig. 7 zeigt einen Teil eines solchen Überwachungssystems gemäß einem Ausführungsbeispiel der Erfindung als Blockdiagramm.
Fig. 8 zeigt zwei Flugzeugtüren mit einem Überwachungssystem gemäß einem Ausführungsbeispiel der Erfindung.
Fig. 9 zeigt ein Luftfahrzeug gemäß einem Ausführungsbeispiel der Erfindung.

### Detaillierte Beschreibung von Ausführungsbeispielen

Die Darstellungen in den Figuren sind schematisch und nicht maßstäblich.

In der folgenden Figurenbeschreibung werden für die gleichen oder ähnlichen Elemente die gleichen Bezugsziffern verwendet.

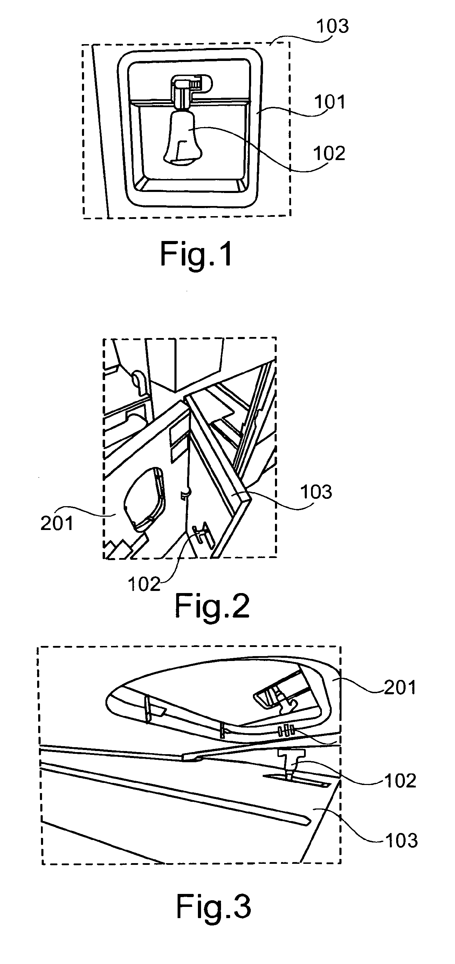

Fig. 1 zeigt einen T-förmigen Handgriff 102 eines Türverriegelungsmechanismus 101 einer Tür 103. Der Griff wird durch den Finger eines Benutzers bedient, indem er um etwa 65 Grad nach oben rotiert wird. Hierfür ist der Griff trapezförmig ausgeführt.

Fig. 2 zeigt die Tür 103 der Fig. 1 mit dem Griff 102, der sich in entriegelter Position befindet, also nach oben geklappt ist. Das Nachobenklappen des T-förmigen Griffes 102 der Cage-Tür (Innentür) soll verhindern, dass die äußere Trunk-Tür (Außentür)201 geschlossen werden kann, wenn die Cage-Tür (Innentür) geöffnet, also entriegelt ist.

In diesem Fall wird das Schließen der Trunk-Tür 201 mechanisch durch den Griff 102 verhindert, der gegen die Trunk-Tür stößt und verhindert, dass sie geschlossen werden kann.

Die Situation mit entriegelter Cage-Tür (Innentür) 103, in der der T-förmige Griff 102 gegen die Trunk-Tür 201 drückt und somit ein Schließen der Trunk-Tür verhindert, ist auch in Fig. 3 gezeigt.

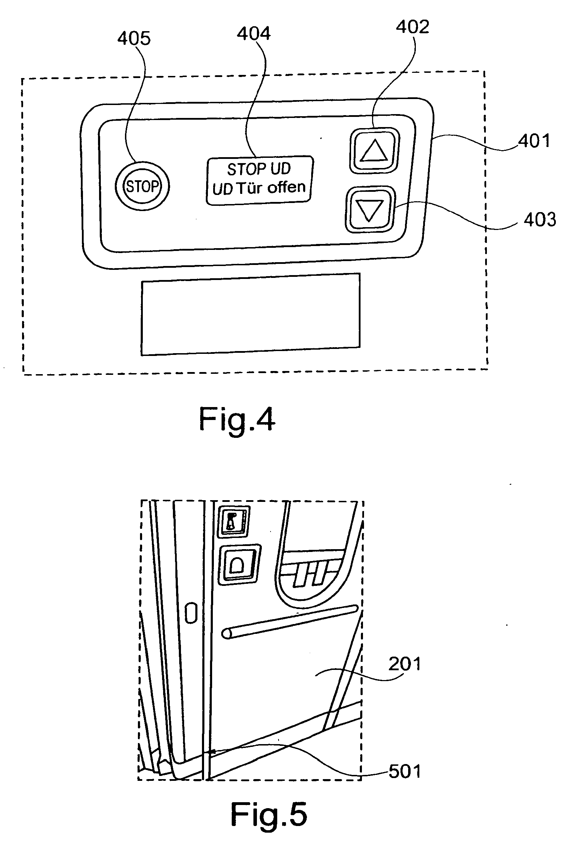

Fig. 4 zeigt ein Betriebspaneldisplay ("Operation Panel Display") zum Anzeigen von Information, welches als HMI (Human Machine Interface) bzw. Wartungsdisplay ausgeführt ist. Das Betriebspaneldisplay ist beispielsweise am System montiert, um Steuerbefehle und Anzeigen auch optisch überwachen zu können.

Wenn die Trunk-Tür geschlossen ist, aber die Cage-Tür immer noch offen ist, ist eine mögliche Systemreaktion die folgende: Das Lift-System geht in den Fahrbetreib über, da eine elektrische Überwachung fehlt. Wird dann aufgrund der Motor- und Geschwindigkeitsüberwachung des Systems der Zustand "Inop"(inoperable), also betriebsunfähig, eingenommen, wird die folgende Information auf der Anzeige 404 des Betriebspaneldisplays 401, wenn sich der Fehlerfall im "Upperdeck" (UD) des Transportmittels ereignet, angezeigt: "Stop UD; UD Door Open". Grund ist die Deformation der UD Außentür (Trunk-Tür) durch den Druck auf die Innenseite, ausgelöst durch die nicht geschlossene Innentür (Cage-Tür. Weiterhin ist eine Stop-Taste 405 vorgesehen, die sich links neben dem Display 404 befindet. Weiterhin ist eine Aufwärtstaste 402 und eine Abwärtstaste 403 zum Bewegen des Lifts vorgesehen.

Da die Trunk-Tür des oberen Decks (Upper Deck, UD) geschlossen ist, während die Cage-Tür (Innentür) geöffnet ist, meldet das Lift-System einen Fehler (FAULT) mit der Information "UD Door Open", da die Trunk-Tür aufgrund der geöffneten Cage-Tür (Innentür) verbogen wurde. Diese Verbiegung wurde von dem entsprechenden Türsensor der Trunk -Türdetektiert. Das entsprechende Sensorsignal lautet in diesem Fall "Tür offen". Die Steuereinheit interpretiert dies als nicht möglichen Zustand Und geht in den "FAULT" Zustand über. Tür offen" während sich der Lift abwärts bewegt" ist ein nicht erlaubter Zustand.

Im Falle von "FAULT" ist die Information auf dem Display 404: "FAULT, Push Stop 2x To Reset". Dies bedeutet, dass der Benutzer die Stop-Taste 405 zweimal gedrückt hat, um das Lift-System zu reinitialisieren. Danach wurde die "FAULT"-Information auf dem Display gelöscht, aber die Tür war immer noch offen. Aus diesem Grund ist das Lift-System nicht betriebsfähig. Grund: Trunk Tür wird elektrisch überwacht. Das System kennt den Zustand der Außentür, jedoch nicht den Zustand der Innentür.

Der T-förmige Griff der Liftkabine drückte gegen den Abstandhalter innerhalb der Trunk-Tür, so dass die Trunk-Tür deformiert wurde.

Die Deformation der Trunk-Tür 201 ist in Fig. 5 gezeigt, siehe Bezugszeichen 501.

Dies wird mit dem Einsatz eines erfindungsgemäßen Überwachungssystems verhindert.

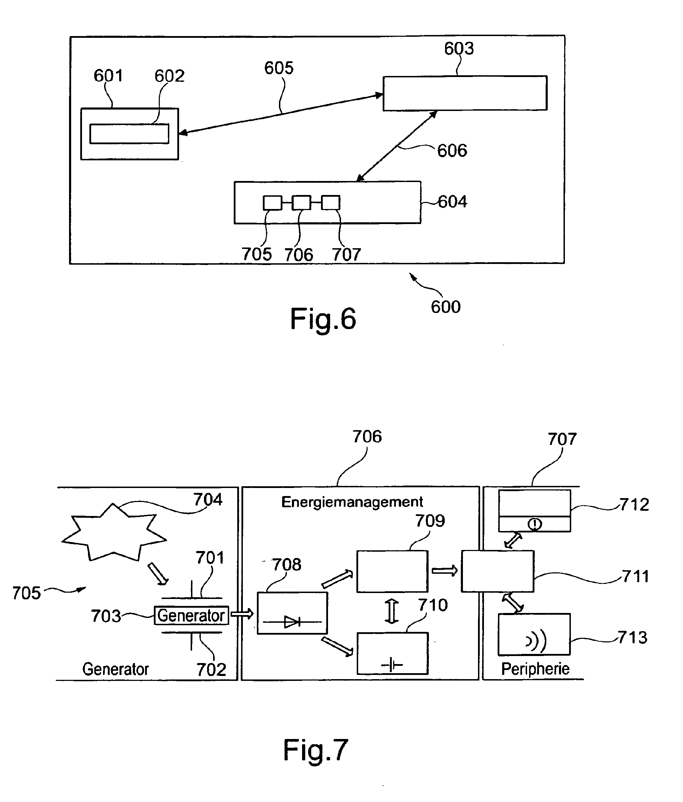

Fig. 6 zeigt ein Überwachungssystem 600 gemäß einem Ausführungsbeispiel der Erfindung. Das Überwachungssystem 600 weist ein Betriebs-Panel 601 (welches dem Betriebs-Panel 401 der Fig. 4 entsprechen kann) mit einem Display 602 und ggf. mehreren Steuerknöpfen auf. Weiterhin ist ein sog. Trolley Lift -Controller 603, also eine Steuereinheit, vorgesehen. Die Steuereinheit 603 ist mit dem Betriebs-Panel 601 kabellos oder über eine bereits existierende Kabelverbindung verbunden.

Weiterhin weist das Überwachungssystem einen Türverriegelungsmechanismus 604 auf, der neben dem Mechanismus auch noch einen Generator 705, ein Energiemanagement 706 und eine Peripherieeinheit 707 aufweist.

Der Türverriegelungsmechanismus 604 ist zum Informationsaustausch mit der Steuerung 603 gekoppelt, beispielsweise über eine drahtlose Kommunikationsverbindung.

Die Energie zur Versorgung der peripheren Geräte (Sensoren, Transceiver) des Überwachungssystems erfolgt durch die Umwandlung mechanischer Vibrations-/ Bewegungsenergie in elektrische Energie.

Auf diese Weise kann eine energieautonome, kabellose Überwachung aller relevanten Zustände des Türverriegelungsmechanismus auf intelligente Weise erfolgen. Die detektierten Überwachungsdaten werden dann per Funkübertragung ferngesteuert an die Steuerung für den Trolleylift geschickt. Zum Empfang der Messdaten und ggf. zum Senden von Steuerdaten von/an den Türverriegelungsmechanismus 604 weist die Steuerung 603 einen Funkempfänger auf.

Im Display 602 des Betriebs-Panels 601 wird der Zustand des Türverriegelungsmechanismus angezeigt. Da das Powermanagement 706 einen Energiespeicher aufweist, ist der ordnungsgemäße Betrieb des Überwachungssystems zu jeder Zeit sichergestellt.

Fig. 7 zeigt die Komponenten 705, 706, 707 des Überwachungssystems.

Im Folgenden wird der Sensor/Aktor 712 beschrieben:
Der Sensor/Aktor 712 ist zum Beispiel induktiv ausgeführt und weist hierfür beispielsweise einen Permanentmagneten auf, zwischen dessen Polen sich eine Induktivität befindet. Die Energie, die im Sensor 712 umgewandelt wird, stammt aus der mechanischen Bewegung des Verriegelungsmechanismus.

Der Sensor kann ebenfalls mit elektrodynamischen, kapazitiven bzw. Hall-Sensoren realisiert werden.

Auf ähnliche Weise kann auch der Generator 705 ausgeführt sein (siehe Pole des Magneten 701, 702 und Induktivität 703).

Der Generator 705 enthält einen oder mehrere Frequenzwandler, um aus mechanischer Vibrationsenergie elektrische Energie zu erzeugen.

Die erzeugte elektrische Energie wird daraufhin an die Energiemanagementeinheit 706 weitergegeben, wo sie beispielsweise von einem elektrischen Gleichrichter 708 in Gleichstrom umgewandelt wird. Daraufhin wird ein Teil der erzeugten Energie an eine Spannungssteuerung 709 weitergegeben, die den µ-Controller 711 mit einer geeigneten Spannung versorgt. Ein anderer Teil der erzeugten Energie wird an die Energiespeichereinheit 710 weitergegeben, wo sie zwischengespeichert wird, um an die Spannungssteuerung 709 und dann an den µ-Controller 711 abgegeben zu werden, falls zusätzliche Energie erforderlich sein sollte.

Der Mikroprozessor 711 steht in Kommunikation mit der Sensorik/Aktorik 712 zur Detektion des Zustands des Türverriegelungsmechanismus. Weiterhin steht der µ-Controller 711 in Kommunikation mit dem Transceiver 713 zur Kommunikation mit der Steuerung 603.

Bei der Sensorik/Aktorik 712 handelt es sich beispielsweise um einen piezoelektrischen Sensor. Durch Druck auf den Hebel des Türverriegelungsmechanismus wird diese mechanische Druckkraft in elektrische Energie umgewandelt. Aus dem daraus resultierenden Signal lässt sich der Zustand des Türverriegelungsmechanismus ableiten. Diese Information kann dann automatisch an das Liftsystem bzw. die Liftsystemsteuerung gesendet werden.

Weiterhin kann der durch die Bewegung des Griffs erzeugte Induktionsstrom detektiert werden. Auf diese Weise ist es möglich, die Bewegung des Griffs nachzuverfolgen, indem der Induktionsstrom ausgewertet wird. Elektrodynamische Generatoren bzw. Hall-Sensoren oder kapazitive Sensoren sind hier ebenfalls anwendbar

Auf diese Weise wird eine Überwachung der Türverriegelung bereitgestellt, die mit verhältnismäßig wenig Energie auskommt. Trotz autonomer Energieversorgung wird eine ständige Überwachung des Türverriegelungsmechanismus ermöglicht sowie eine sofortige Signalübertragung an eine entsprechende Steuerung 603.

Das Überwachungssystem ermöglicht also eine ständige Überwachung, ist kostengünstig, sehr zuverlässig, einfach zu installieren, benötigt nur geringen Wartungsaufwand. Weiterhin sind keine Kabelverbindungen und keine Batterien notwendig.

Da also auf Kabel und Batterien verzichtet werden kann, wird zusätzlicher Platz zum Einbau der Sensorik/Aktorik in bisher hierfür nicht verwendbare Bereiche möglich. Weiterhin enthalten insbesondere auch bewegliche Bauteile keine Verkabelung, wodurch die Störanfälligkeit noch weiter reduziert wird.

Insbesondere ist auch kein Abstandhalter mehr erforderlich, um ein Schließen der Außentür bei geöffneter Innentür mechanisch zu verhindern.

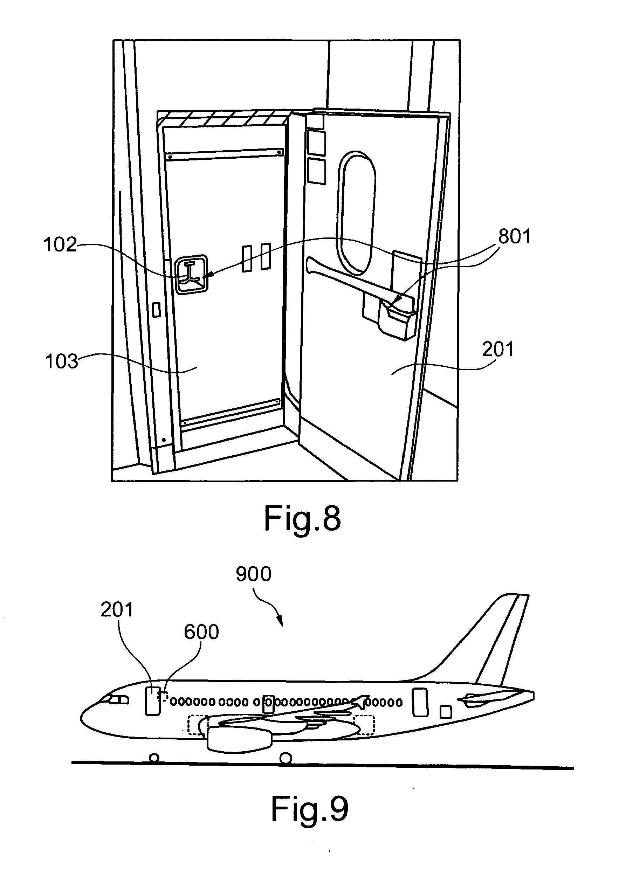

Fig. 8 zeigt ein solches Überwachungssystem, das in die Türen eines Luftfahrzeugs eingebaut ist (siehe Bezugszeichen 801).

In die Tür 201 wird kein Teil des Überwachungssystems eingebaut. Der ursprünglich vorgesehene Abstandshalter wird nicht weiter benötigt (was zu einer Gewichts- und Kosteneinsparung führt. Modifiziert wird die Innentürverriegelung 102. Die Cage Tür selbst wird nicht weiter modifiziert.

Es ist ein Ziel der Erfindung, eine einfache Installation zu gewährleisten. Daher wird das erfindungsgemäße System als eine Einheit ausgeführt, welches ohne spezielle Werkzeuge ein-, ausgebaut und gewartet werden kann. Dadurch wird der Zeitaufwand für die Installation und Wartung erheblich reduziert.

Durch die "Fail Safe" Technik (gemeint ist die ständige Zustandsüberwachung) erhöht sich erheblich der MTBF Wert (also die mittlere Betriebsdauer zwischen Ausfällen, "Mean Time Between Failures") bzw. verringet sich der MTBUM Wert (also die Zeitdauer zwischen einzelnen Wartungsdurchgängen, "Mean Time Between Unscheduled Maintenance").

Fig. 9 zeigt ein Luftfahrzeug 900 mit einer Tür 201 und einem Überwachungssystem 600. Es ist zu beachten, dass sich die Tür 201 der Figuren 1 bis 5 in der Verkleidung des Liftsystems befindet und die Schnittstelle zur Kabine des Flugzeuges bildet. Eine solche Tür ist in Fig. 9 nicht dargestellt.

Das Überwachungssystem kann in jedem Transportmittel (Schiene, Luft, Straße) und in jeder Tür- bzw. Verschlussverriegelung eingebaut werden.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Überwachungssystem für einen Türverriegelungsmechanismus einer Tür eines Transportmittels, **dadurch gekennzeichnet, dass** das Überwachungssystem aufweist:
einen Generator (701, 702, 703) zum Erzeugen von elektrischer Energie aus Vibrationsenergie zum Betreiben des Überwachungssystems (600);
einen Sensor (712) zum Detektieren eines Zustands des Türverriegelungsmechanismus und zur Generierung eines elektrischen Signals, welches der momentanen Zustandsbeschreibung dient;
wobei das Überwachungssystem (600) zum energieautonomen Betrieb ausgeführt ist.

2. Überwachungssystem nach Anspruch 1,
wobei die Vibrationsenergie von einer Vibration des Transportmittels stammt; und
wobei der Generator (701, 702, 703) Frequenzwandler zum Erzeugen der elektrischen Energie aus Vibration aufweist.

3. Überwachungssystem nach Anspruch 1 oder 2, weiterhin aufweisend:
eine Energiemanagementeinheit (706) zum Steuern einer Ausgangsspannung für einen Prozessor (711).

4. Überwachungssystem nach einem der vorhergehenden Ansprüche,
wobei die Energiemanagementeinheit (706) einen Energiespeicher (710) zur Speicherung zumindest eines Teils der elektrischen Energie zum Betreiben des Überwachungssystems (600) aufweist.

5. Überwachungssystem nach Anspruch 4,
wobei der Energiespeicher (710) einen Kondensator aufweist.

6. Überwachungssystem nach einem der vorhergehenden Ansprüche,
wobei der Sensor (712) zur Umwandlung einer Druckkraft oder einer Bewegungskraft in ein elektrisches Signal ausgeführt ist.

7. Überwachungssystem nach einem der vorhergehenden Ansprüche,
wobei es sich bei der Tür um eine Cage-Tür (103) eines Passagierflugzeugs handelt.

8. Überwachungssystem nach einem der vorhergehenden Ansprüche, weiterhin aufweisend:
einen µ-Controller (711), der an den Sensor (712) gekoppelt ist und von dem Sensor (712) ein Messsignal entgegennimmt, das mit dem Zustand des Türverriegelungsmechanismus korrespondiert;
einen Transceiver (713) zum kabellosen Übermitteln eines Signals von dem µ-Controller (711), das mit dem Messsignal korrespondiert, an eine Steuereinheit (603).

9. Überwachungssystem nach einem der vorhergehenden Ansprüche,
wobei es sich bei der Steuereinheit (603) um eine Steuerung für einen Trolley Lift handelt.

10. Überwachungssystem nach einem der vorhergehenden Ansprüche, weiterhin aufweisend:
ein Display (602) zum Anzeigen des Zustands des Türverriegelungsmechanismus.

11. Transportmittel mit einer Tür mit Türverriegelungsmechanismus und einem Überwachungssystem nach einem der vorhergehenden Ansprüche.

12. Transportmittel nach Anspruch 11, wobei das Transportmittel ein Luftfahrzeug (900) ist.

13. Verwendung eines Überwachungssystems nach einem der Ansprüche 1 bis 10 in einem Luftfahrzeug.

14. Verfahren zum Überwachen eines Türverriegelungsmechanismus einer Tür eines Transportmittels, das Verfahren aufweisend die Schritte:
Erzeugen von elektrischer Energie aus Vibrations-Bewegungsenergie zum Betreiben eines Überwachungssystems (600);
Detektieren eines Zustands des Türverriegelungsmechanismus durch einen Sensor des Überwachungssystems.

## Claims

1. A monitoring system for a door locking mechanism of a door of a transport means, **characterized in that** the monitoring system comprises:
a generator (701, 702, 703) for generating electrical energy out of vibration energy for operating the monitoring system (600);
a sensor (712) for detecting a state of the door locking mechanism and generating an electrical signal, which serves to describe the current state;
wherein the monitoring system (600) is designed for energy autonomous operation.

2. The monitoring system of claim 1,
wherein the vibration energy stems from a vibration of the transport means; and wherein the generator (701, 702, 703) comprises frequency converters for generating the electrical energy from vibration.

3. The monitoring system of claim 1 or 2, further comprising:
an energy management unit (706) for controlling an output voltage for a processor (711).

4. The monitoring system of one of the preceding claims,
wherein the energy management unit (706) comprises an energy storage device (710) for storing at least a portion of the electrical energy for operating the monitoring system (600).

5. The monitoring system of claim 4,
wherein the energy storage device (710) comprises a capacitor.

6. The monitoring system of one of the preceding claims,
wherein the sensor (712) is designed for converting a compressive force or motive force into an electrical signal.

7. The monitoring system of one of the preceding claims,
wherein the door is a cage door (103) of a passenger aircraft.

8. The monitoring system of one of the preceding claims, further comprising:
a µ-controller (711), which is coupled to the sensor (712) and receives a measuring signal from the sensor (712) corresponding to the state of the door locking mechanism;
a transceiver (713) for wirelessly transmitting a signal corresponding to the measuring signal from the µ-controller (711) to the control unit (603).

9. The monitoring system of one of the preceding claims,
wherein the control unit (603) is a controller for a trolley lift.

10. The monitoring system of one of the preceding claims, further comprising:
a display (602) for indicating the state of the door locking mechanism.

11. A transport means with a door having a door locking mechanism and a monitoring system of one of the preceding claims.

12. The transport means of claim 11, wherein the transport means is an aircraft (900).

13. Use of a monitoring system of one of the claims 1 to 10 in an aircraft.

14. A method for monitoring a door locking mechanism of a door of a transport means, wherein the method comprises the steps of:
generating electrical energy from vibration-kinetic energy for operating a monitoring system (600);
detecting a state of the door locking mechanism via a sensor of the monitoring system.

## Revendications

1. Système de contrôle pour un mécanisme de verrouillage d'une porte d'un moyen de transport, **caractérisé en ce que** le système de contrôle présente :
un générateur (701, 702, 703) destiné à produire de l'énergie électrique à partir d'une énergie vibratoire pour faire fonctionner le système de contrôle (600) ;
un capteur (712) destiné à détecter un état du mécanisme de verrouillage de porte et à générer un signal électrique qui sert à décrire l'état instantané ;
dans lequel le système de contrôle (600) est réalisé pour fonctionner de manière autonome en énergie.

2. Système de contrôle selon la revendication 1,
dans lequel l'énergie vibratoire provient d'une vibration du moyen de transport ; et
dans lequel le générateur (701, 702, 703) présente un convertisseur de fréquence destiné à produire une énergie électrique à partir des vibrations.

3. Système de contrôle selon la revendication 1 ou 2, présentant en outre :
une unité de gestion de l'énergie (706) destinée à commander une tension de sortie pour un processeur (711).

4. Système de contrôle selon une des revendications précédentes,
dans lequel l'unité de gestion de l'énergie (706) présente un stockage d'énergie (710) destiné à stocker au moins une partie de l'énergie électrique pour faire fonctionner le système de contrôle (600).

5. Système de contrôle selon la revendication 4,
dans lequel le stockage d'énergie (710) présente un condensateur.

6. Système de contrôle selon une des revendications précédentes,
dans lequel le capteur (712) est réalisé pour convertir une force de pression ou une force de déplacement en un signal électrique.

7. Système de contrôle selon une des revendications précédentes,
dans lequel la porte est une porte intérieure (103) d'un avion de transport.

8. Système de contrôle selon une des revendications précédentes, présentant en outre ;
un système de commande µ (711) qui est couplé au capteur (712) et qui reçoit un signal de mesure à partir du capteur (712), qui correspond à l'état du mécanisme de verrouillage de porte ;
un émetteur-récepteur (713) destiné à transmettre sans fil un signal à partir du système de commande µ (711) et correspondant au signal de mesure à une unité de commande (603).

9. Système de contrôle selon une des revendications précédentes,
dans lequel l'unité de commande (603) est une commande pour un chariot de levage.

10. Système de contrôle selon une des revendications précédentes, présentant en outre :
un affichage (602) destiné à afficher l'état du mécanisme de verrouillage de porte.

11. Moyen de transport avec une porte comportant un mécanisme de verrouillage de porte et un système de contrôle selon une des revendications précédentes.

12. Moyen de transport selon la revendication 11, dans lequel le moyen de transport est un aéronef (900).

13. Utilisation d'un système de contrôle selon une des revendications 1 à 10 dans un aéronef.

14. Procédé de contrôle d'un mécanisme de verrouillage d'une porte d'un moyen de transport, le procédé présentant les étapes consistant à :
produire de l'énergie électrique à partir de l'énergie des mouvements vibratoires pour faire fonctionner un système de contrôle (600) ;
détecter un état du mécanisme de verrouillage de porte par un capteur du système de contrôle.
